# EUROPEAN PATENT APPLICATION

(11) **EP 3 416 374 A1**
(43) Date of publication of application: **19.12.2018**
(21) Application number: 17175710.7
(22) Date of filing: 13.06.2017
(51) Int. Cl.: H04N 5/44, H04N 5/445, H04N 21/4415, H04N 21/422, H04N 7/16, G08C 17/00

(54) **TELEVISION SYSTEM WITH CONTROLLABLE ACCESSIBILITY TO A FEATURE**

(71) Applicant: TP Vision Holding B.V., 1097 JB Amsterdam (NL)
(72) Inventor: Senapati, Gyana Ranjan, Bangalore, Karnataka (IN)
(74) Representative: V.O.

(57) **Abstract**

A television system includes a biometric input device (2, 5), a storage device (4) and a television (1). The biometric input device (2, 5) receives a biometric information input from a user. The storage device (4) stores an authorized biometric data piece. The television (1) has a feature to which accessibility is controllable using the authorized biometric data piece. Upon receipt of the biometric information input during operation of the television (1) in an accessibility control mode, the television (1) compares the biometric information input with the authorized biometric data piece, and permits control of the accessibility to said feature when the biometric information input matches the authorized biometric data piece.

## Description

The disclosure relates to a television system, and more particularly to a television system with controllable accessibility to specific content or services.

In conventional television systems, alphanumeric passwords are used for channel locks or parental rating based locks to limit access to age inappropriate content.

However, people may forget the passwords if the passwords are not used very often, and input of the string of the passwords may be time-consuming and inconvenient with a remote controller of the conventional television system.

Therefore, an object of the disclosure is to provide a television system that can alleviate at least one of the drawbacks of the prior art.

According to the disclosure, the television system includes a biometric input device, a storage device and a television. The biometric input device is configured to receive a biometric information input from a user. The storage device is for storing an authorizedbiometric data piece therein. The television is communicatively coupled to the biometric input device for receiving the biometric information input therefrom, is coupled to the storage device for accessing the authorized biometric data piece, and has a feature whose accessibility is controllable. Upon receipt of the biometric information input during operation of the television in an accessibility control mode, the television compares the biometric information input with the authorized biometric data piece, and permits control of the accessibility to the feature when the biometric information input matches the authorized biometric data piece.

Other features and advantages of the disclosure will become apparent in the following detailed description of the embodiment (s) with reference to the accompanying drawings, of which:
FIG. 1 is a perspective view illustrating a first embodiment of the television system according to the disclosure; and
FIG. 2 is a perspective view illustrating a second embodiment of the television system according to the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

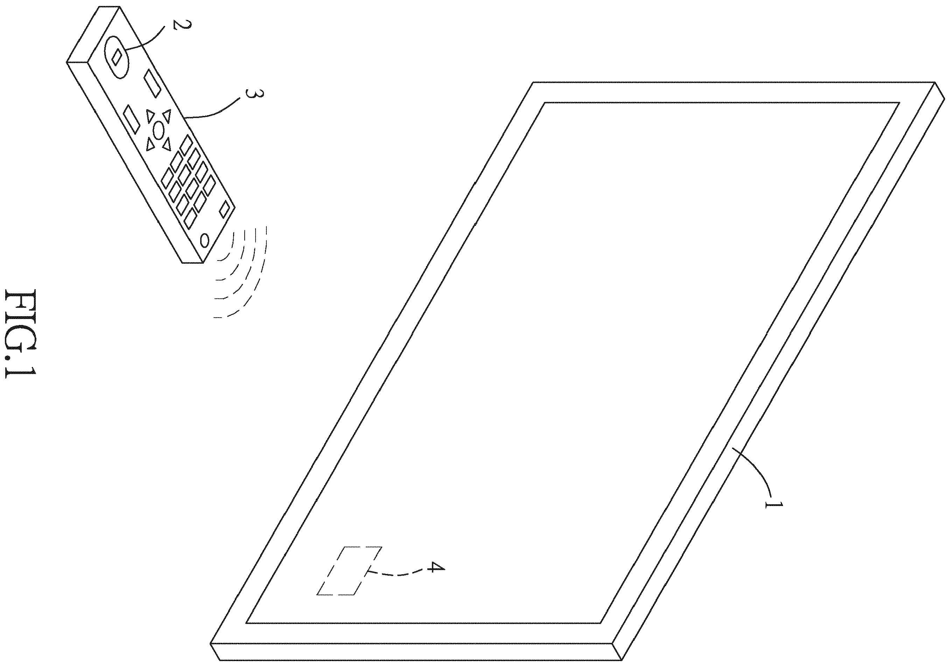

Referring to FIG. 1, the first embodiment of the television system includes a television 1, a fingerprint scanner 2 allowing a fingerprint input from a user, a remote controller 3, and a storage device 4 (e.g., a flash memory, a hard disk drive, etc.). The television 1 has at least one specific feature (e.g., a specific service, channel, program event, operation, etc.) whose accessibility is controllable, e.g., limitations may be imposed on access to the at least one specific feature and in some cases, said limitations may be configurable/user-defined. For example, access to a particular channel may only be permitted for certain family members (e.g., parents) but restricted for other family members (e.g., children). The remote controller 3 is capable of wireless signal/data transmission to the television 1 using wireless communication techniques, such as Bluetooth, Zigbee, etc., but this disclosure is not limited thereto. The fingerprint scanner 2 is mounted to the remote controller 3, and is communicatively coupled to the television 1 through the remote controller 3, but such configuration is not necessary since the fingerprint scanner 2 may be an independent device with wired or wireless communication capability to communicate with the television 1. In this embodiment, the storage device 4 is built in the television 1, but this disclosure is not limited thereto.

When a user intends to enable an access-limiting function of the television 1 (i.e., to turn on the function that enables the setup of accessibility control on certain feature(s) of the television 1), the user may first use the remote controller 3 or buttons on the television 1 to operate the television 1 in an accessibility configuring mode, so that the television 1 displays information to instruct the user to perform corresponding actions, such as fingerprint scanning, and the user may follow the displayed information to put his/her finger on the fingerprint scanner 2 for a scanning operation to generate a fingerprint input. Upon receipt of the fingerprint input from the fingerprint scanner 2 during operation of the television 1 in the accessibility configuring mode, a processor (not shown) of the television 1 stores the fingerprint input in the storage device 4 as an authorized biometric data piece. Multiple different fingerprint inputs may be stored in the storage device 4 as different authorized biometric data pieces.

When the user intends to control accessibility to any specific feature of the television 1 (or edit accessibility status (e.g., access-enabled or access-disabled) of the specific feature, for example, lock/unlock a channel), the remote controller 3 may be used to operate the television 1 in an accessibility control mode, and the user may put his/her finger on the fingerprint scanner 2 for a scanning operation to generate a fingerprint input. Upon receipt of the fingerprint input through the remote controller 3 during operation of the television 1 in the accessibility control mode, the processor of the television 1 compares the fingerprint input with the authorizedbiometric data piece(s) stored in the storage device 4, and permits control of the accessibility to the specific feature when the fingerprint input matches any authorized biometric data piece stored in the storage device 4. When the fingerprint input does not match any authorized biometric data piece stored in the storage device 4, the television 1 may display a message indicating that the fingerprint input is invalid and the processor of the television 1 does not permit control of the accessibility to the specific feature.

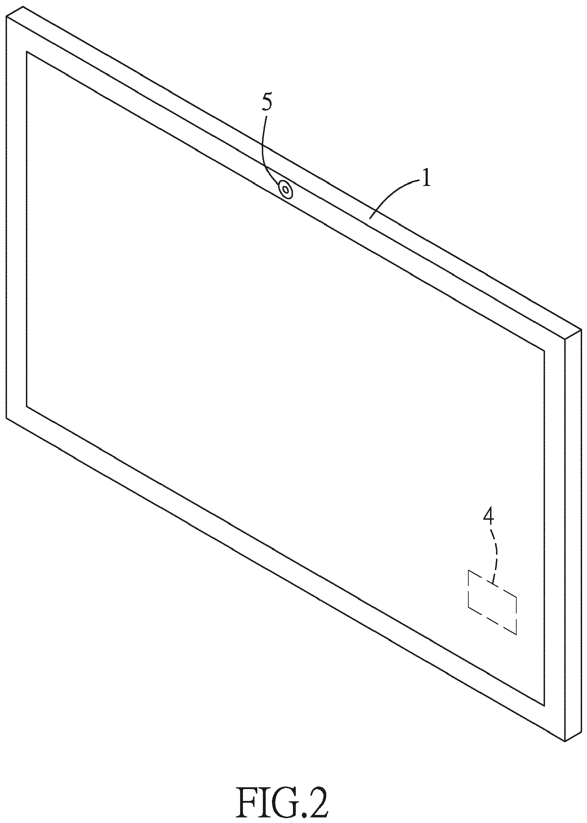

Referring to FIG. 2, the second embodiment of the television system includes a television 1, a storage device 4, and a camera 5 which is mounted to the television 1 in this embodiment and which is communicatively coupled to the television 1 through for example wired connection (e.g., USB interface).

When a user intends to enable an access-limiting function of the television 1, the user may first operate the television 1 in an accessibility configuring mode, so that the television 1 displays information to instruct the user to perform corresponding actions, such as photo taking. Then, the television 1 may automatically capture an image within a predetermined time period, or the user may manually capture his/her facial image using the camera 5 to generate a facial information input that contains facial feature data of the user. Upon receipt of the facial information input from the camera 5 during operation of the television 1 in the accessibility configuring mode, the television 1 stores the facial information input in the storage device 4 as an authorized biometric data piece. Multiple different facial information inputs may be stored in the storage device 4 as different authorized biometric data pieces.

When the user intends to control (e.g., lock or unlock) accessibility to a specific feature of the television 1, the user may operate the television 1 in an accessibility control mode, and use the camera 5 to take his/her facial image to generate a facial information input. Upon receipt of the facial information input from the camera 5 during operation of the television 1 in the accessibility control mode, the television 1 compares the facial information input with the authorized biometric datapiece (s) stored in the storage device 4, and permits controlling of the accessibility to the specific feature when the facial information input matches any authorized biometric data piece stored in the storage device 4. When the facial information input does not match any authorizedbiometric data piece stored in the storage device 4, the television 1 may display a message indicating that the facial information input is invalid and the television 1 does not permit controlling of the accessibility to the specific feature.

By virtue of using a biometric input device (e.g., the fingerprint scanner, the camera, etc.), a biometric information input (e.g., fingerprint data, facial images, etc.) from the user may be used to implement the access-limiting function of the television 1, the user does not have to memorize the alphanumeric passwords which are easily forgotten, and may save time for manual input of the password.

In the description above, for the purposes of explanation, numerous specific details have been set forth in order to provide a thorough understanding of the embodiment (s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A television system that includes a television (1) having a feature whose accessibility is controllable, and a storage device (4) coupled to said television (1), comprising:
a biometric input device (2, 5) configured to receive a biometric information input from a user;
wherein said storage device (4) is for storing an authorized biometric data piece therein;
wherein said television (1) is communicatively coupled to said biometric input device (2, 5) for receiving the biometric information input therefrom, and is configured to access the authorized biometric data piece stored in said storage device (4); and
wherein, upon receipt of the biometric information input during operation of said television (1) in an accessibility control mode, said television (1) compares the biometric information input with the authorized biometric data piece stored in said storage device (4), and permits control of the accessibility to said feature when the biometric information input matches the authorized biometric data piece.

2. The television system of Claim 1, further comprising a remote controller (3) configured to wirelessly communicate with said television (1);
wherein said biometric input device (2, 5) includes a fingerprint scanner (2) that is mounted to said remote controller (3), the biometric information input received from said fingerprint scanner (2) is a fingerprint input, and the authorized biometric data piece is a fingerprint data piece.

3. The television system of Claim 1 or 2, wherein said biometric input device (5) includes a camera (5) mounted to said television (1), the biometric information input received from said camera is a facial information input, and the authorized biometric data piece includes a facial feature data piece.

4. The television system of any one of the preceding claims, wherein, upon receipt of the biometric information input during operation of said television (1) in an accessibility configuring mode, said television (1) stores the biometric information input in said storage device (4) as an additional authorized biometric data piece.
